# EUROPEAN PATENT SPECIFICATION

(11) **EP 2 586 691 B1**
(45) Date of publication and mention of the grant of the patent: **08.06.2016**
(21) Application number: 12187926.6
(22) Date of filing: 10.10.2012
(51) Int. Cl.: B62K 11/14

(54) **Motor driven vehicle**
Motorfahrzeug
Véhicule à moteur

(30) Priority: 26.10.2011 JP 2011235153
(43) Date of publication of application: 01.05.2013
(73) Proprietor: Honda Motor Co., Ltd., Tokyo 107-8556 (JP)
(72) Inventor: Yamazaki, Takayuki, Saitama, 351-0193 (JP)
(74) Representative: Beder, Jens

(56) References cited:
- WO-A2-03/022671
- DE-A1- 10 141 750
- GB-A- 2 450 348
- JP-B- 4 648 599
- US-A- 3 598 295
- US-B1- 7 594 631
- US-B1- 7 714 704

## Description

The present invention relates to a motor driven vehicle wherein a meter unit is provided on a handle member.

Vehicles include a meter unit provided forward of a driver's seat such that the driver can watch the same. Various structures and shapes or forms of meter unit have been proposed in accordance with vehicles (refer to, for example, JP-B-4 648 599 (FIG. 51)).

As shown in FIG. 51 of Japanese Patent No. 4648599, which is regarded as the closest prior art, a handle post (333) (numerals in parentheses represent reference symbols described in JP-B-4 648 599. This holds true for the following description) of a two-wheeled vehicle has a meter unit (337) provided at an upper end thereof.

This meter unit (337) is formed by stacking, a middle case (432) is placed on a lower case (433) and an upper case (431) is placed on the middle case (432) in this order. Inventive measures are tried, for example the upper case (431) can be opened with respect to the middle case (432).

A speedometer (436) is disposed at a front portion of an upper face (431a) of the upper case (431), the driver can visually observe the vehicle speed.

The speedometer (436) digitally displays the vehicle speed. The digital display is generally liquid crystal display. Assuming that the sunlight directly irradiates upon the speedometer (436) from above, it is desired that the vehicle speed display would readily be watched.

Although the upper case (431) in Japanese Patent No. 4648599 is attached for opening and closing manner with respect to the middle case (432), the position of the upper case (431) is limited to the posture showed in FIG. 51 during running of the vehicle. In other words, the inclination angle (attachment posture) of the speedometer (436) is fixed.

From the view point of various driving postures of drivers and different heights of the eyes arising from physical differences, the speedometer (436) with changeable inclination angle is desired.

It is a subject of the present invention to provide a vehicle including a meter unit whose inclination angle can be varied arbitrarily and which is less likely to be influenced by the sunlight.

According to the invention as set forth in claim 1, there is provided a motor driven vehicle which includes a meter unit provided between left and right handle posts and runs using an electric motor, to which power is supplied from a vehicle-mounted battery, as a driving source, wherein
the meter unit is a portable terminal, a display portion on the portable terminal for displaying information such as a vehicle speed, and
the portable terminal is held by a portable terminal holder tiltably attached to the left and right handle posts through a rod extending in a vehicle widthwise direction. The rod and the portable terminal are arranged between the left and right handle posts.

The portable terminal holder is configured from a holder base portion fitted into the rod, a support shaft extending perpendicularly to the rod from the holder base portion, and a holder main body portion turnably held by the support shaft and holding the portable terminal holder.

The portable terminal holder includes a visor portion for covering the upper portion of the portable terminal to block the sunlight, and the left and right handle posts include a swollen portion overlapping with the visor portion as viewed in side elevation of the vehicle.

According to the invention as set forth in claim 2, the handle posts are foldable.

According to the invention as set forth in claim 3, a receiving side terminal is provided on the portable terminal holder so as to connect a portable side terminal.

According to the invention as set forth in claim 4, the portable side terminal and the receiving side terminal include, in addition to an information system terminal for exchanging information, an electric system terminal for supplying power from the vehicle-mounted battery to the portable side terminal.

According to the invention as set forth in claim 5, a seat, a driver is to be seated is disposed rearward of the vehicle with respect to the handle posts, and a groove is provided for accommodating the folded handle posts on the seat.

According to the invention as set forth in claim 6, the folded handle posts are accommodated horizontally in the groove in such a manner as to extend in parallel to an upper face of the seat.

In the invention as set forth in claim 1, the meter unit is a portable terminal. The portable terminal holder is tiltably attached to the left and right handle posts through the rod, and the portable terminal is attached to the portable terminal holder.

Since the portable terminal holder is attached for tilting movement, the angle of the portable terminal can be arbitrarily set. In other words, a technique by which the inclination angle of the meter unit can be arbitrarily changed is provided.

The portable terminal holder is configured from the holder base portion fitted into the rod, the support shaft extending perpendicularly to the rod from the holder base portion, and the holder main body portion turnably held by the support shaft and holding the portable terminal holder.

The portable terminal holder can be tilted in a longitudinal direction of the vehicle by the rod. In addition, the portable terminal holder can be turned by the support shaft. As a result, the direction of the meter unit (portable terminal) can be changed three-dimensionally.

The portable terminal holder includes the visor portion for covering the upper portion of the portable terminal to block the sunlight, and the left and right handle posts include the swollen portion overlapping with the visor portion as viewed in side elevation of the vehicle.

The sunlight reaching the portable terminal is blocked by the visor portion. In addition, the swollen portions of the handle posts are provided on the left and right in the vehicle widthwise direction with respect to the visor portion. The swollen portions exhibit an action of blocking the sunlight.

With the present invention, the light blocking action is exhibited with much more certainty in comparison with a case in which only the visor portion is provided. In particular, even if the position of the sun varies, the display portion of the portable terminal can be visually observed well.

In the invention as set forth in claim 2, the handle posts are foldable.

Since the angle of the portable terminal can be arbitrarily set, the portable terminal can be set to an angle easy to be viewed even after the handle posts are folded.

In the invention as set forth in claim 3, the receiving side terminal is provided on the portable terminal holder so as to connect the portable side terminal.

When the portable terminal is electrically connected to a vehicle-mounted computer or the like, with the present invention, less conspicuous connections between harnesses promise an improved outer appearance.

In the invention as set forth in claim 4, the portable side terminal and the receiving side terminal include the electric system terminal for supplying power from the vehicle-mounted battery to the portable side terminal.

The portable terminal can be charged constantly or occasionally. When the portable terminal is separated from the vehicle and carried around, fully charged portable terminal prevents the battery from running out.

In the invention as set forth in claim 5, the groove is provided for accommodating the folded handle posts on the seat. Since the protrusion amount of the handle posts is reduced in holding, the accommodation posture becomes compact.

In the invention as set forth in claim 6, the folded handle posts are accommodated horizontally in the groove in such a manner as to extend in parallel to the upper face of the seat. Since the handle posts extend in parallel to the seat, the outer appearance is improved in accommodating.

FIG. 1 is a perspective view of a motor driven vehicle according to the present invention.
FIG. 2 is an exploded perspective view of an essential part of a vehicle body in the motor driven vehicle according to the present invention.
FIG. 3 is a perspective view of the motor driven vehicle as viewed from rearward.
FIG. 4 is a block diagram around a vehicle-mounted battery.
FIG. 5 is a view showing a modification example of FIG. 4.
FIG. 6 is an exploded perspective view of handle posts.
FIG. 7 is a view showing an attachment structure of handle grips.
FIG. 8 is a sectional view taken along line 8-8 of FIG. 7.
FIG. 9 is a view of operation of FIG. 8.
FIG. 10 is a sectional view of a handle post locking mechanism.
FIGS. 11(a) and 11(b) are views of operation of the handle post locking mechanism.
FIG. 12 is a view showing a structure of a steering locking mechanism.
FIG. 13 is a view of operation of FIG. 12.
FIG. 14 is a view showing a procedure of folding the handle post.
FIG. 15 is a view showing the folded handle post.
FIG. 16 is an exploded perspective view of a portable terminal holder.
FIG. 17 is a sectional view taken along line 17-17 of FIG. 16.
FIG. 18 is a view of operation of the portable terminal holder.

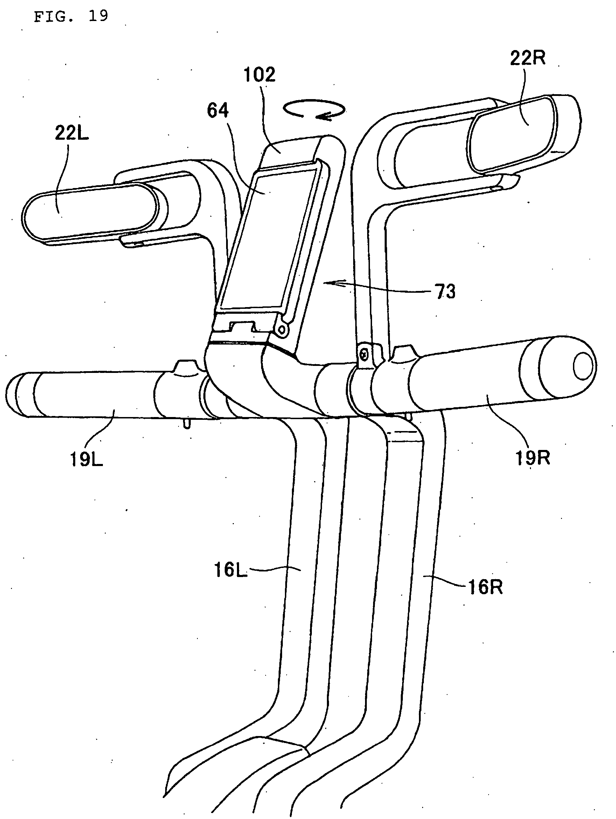

FIG. 19 is another view of operation of the portable terminal holder.
FIGS. 20(a) and 20(b) are views showing a posture of a portable terminal.
FIG. 21 is a view showing another posture of the portable terminal.
FIG. 22 is a view of another operation of the handle post.
FIG. 23 is a view showing another form of a seat.
FIG. 24 is a view of operation of FIG. 23.

An embodiment of the present invention is described below with reference to accompanying drawings. It is to be noted that the drawings should be viewed in the direction of reference symbols. The forward, rearward, leftward, and rightward directions are defined with reference to a driver.

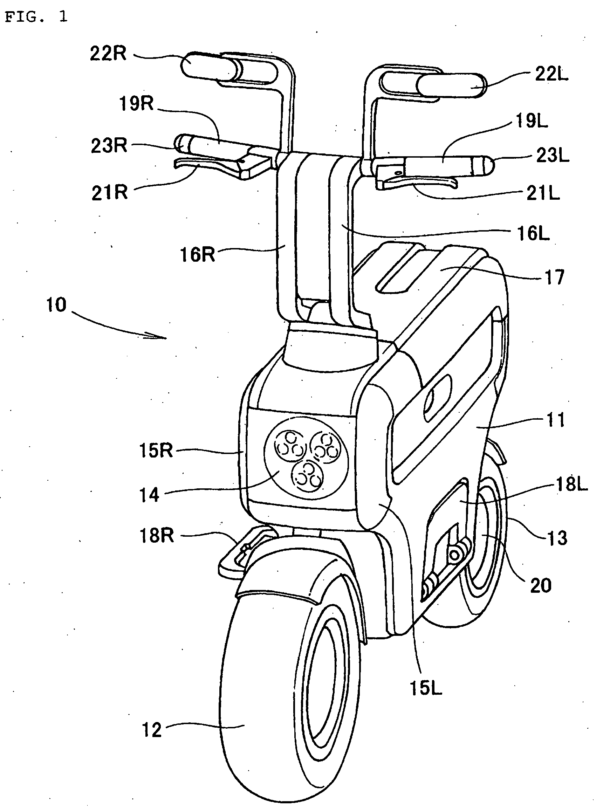

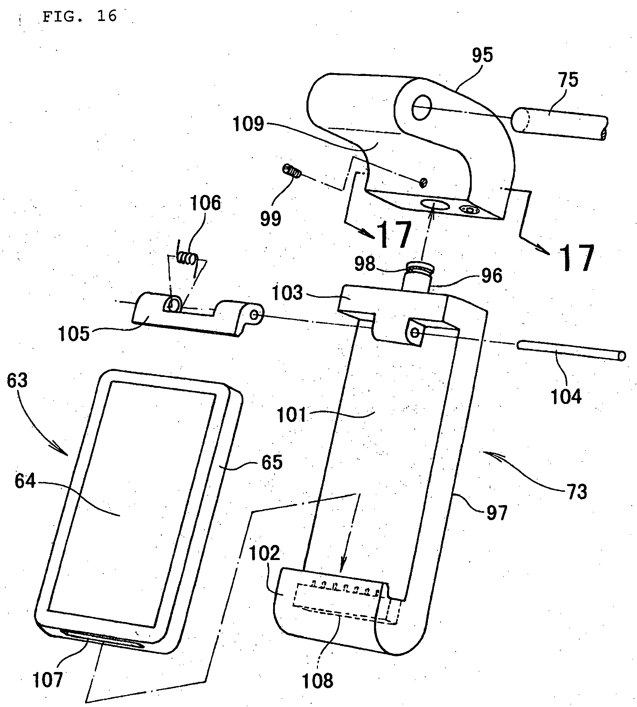

Details of a portable terminal holder of the present invention are described with reference to FIG. 16 and so forth. Prior to the description, the structures of a motor driven vehicle and a foldable handle post are described with reference to FIGS. 1 to 15.

As shown in FIG. 1, a motor driven vehicle 10 includes a front wheel 12 and a rear wheel 13 provided on a vehicle body 11 in boxed type, and includes a headlamp 14, a left front winker 15L (L is a suffix representing the left; this holds true in the following description) and a right front winker 15R (R is a suffix representing the right; this holds true in the following description) at front face of the vehicle body 11. The motor driven vehicle 10 further includes handle posts 16L and 16R at a front portion of an upper face of the vehicle body 11 and includes a seat 17 at a rear portion of the upper face of the vehicle body 11. The motor driven vehicle 10 further includes foldable steps 18L and 18R on side faces of the vehicle body 11. The motor driven vehicle 10 is a motorized two-wheeled vehicle driven by an electric motor 20 built in the rear wheel 13.

For the convenience, the left step 18L is shown in an uprightly standing (non-used state, accommodated state) while the right step 18R is shown in a folded down state (used state).

The driver can start the motor driven vehicle 10 to run by sitting on the seat 17, placing the feet on the steps 18L and 18R, gripping a handle grip 19L at an upper portion of the left handle post 16L as well as gripping a handle grip 19R at an upper portion of the right handle post 16R and turning the right handle grip 19R. When the motor driven vehicle 10 is running, the driver can brake by left and right brake levers 21L and 21R and visually observe rearward on left and right back mirrors 22L and 22R. Since side-marker lamps 23L and 23R are provided on the vehicle width outer sides of the handle grips 19L and 19R, the vehicle width is let recognized from the outside.

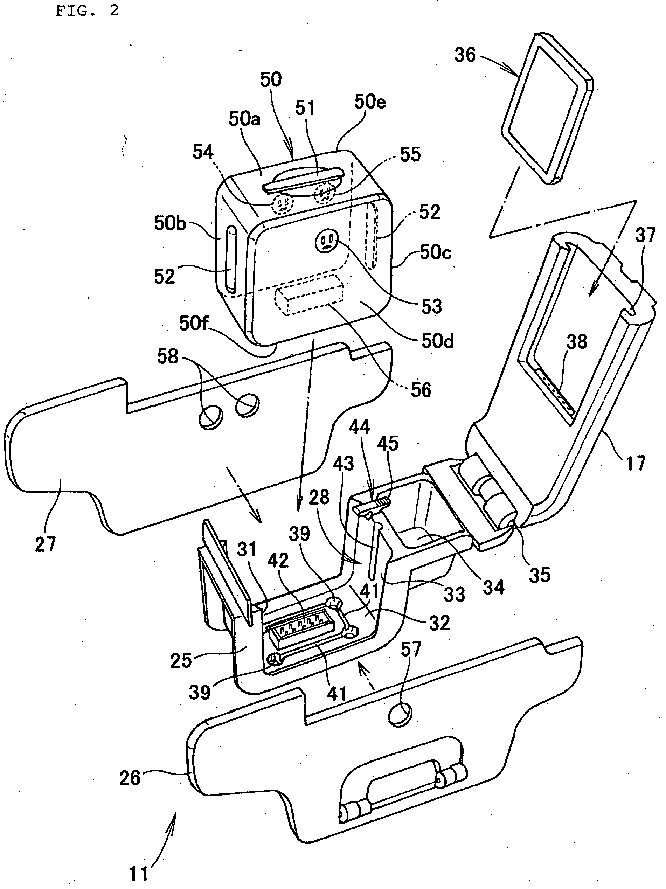

FIG. 2 is an exploded perspective view of an essential part of the vehicle body 11. The vehicle body 11 includes, as principal components thereof, a central frame 25 disposed the center of the vehicle widthwise direction, a left side frame 26 extending along the left side face of the central frame 25, and a right side frame 27 extending along the right side face of the central frame 25.

The central frame 25 is configured from a front wall portion 31, a bottom portion 32 and a rear wall portion 33 which configure a battery accommodating region 28, and a container 34 provided continuously rearward of the rear wall portion 33 (with respect to the vehicle body). The seat 17 can be attached for opening and closing manner to a rear portion of the container 34 through a hinge 35.

The seat 17 has, on a bottom face (lower face) thereof, a pocket portion 37 for removably accommodating a tablet type terminal 36 therein. The seat 17 has a terminal portion 38 at one end of the pocket portion 37 and can be electrically connected to the tablet type terminal 36 on the vehicle body side. This tablet type terminal 36 can also serve as a vehicle-mounted computer in vehicle running (details are described later). When the vehicle is not running, as shown in the figure, video images and games can be enjoyed as a television receiver by opening the seat 17 and erecting the tablet type terminal 36 uprightly. Alternatively, the tablet type terminal 36 can be utilized as a network information acquiring tool as a personal computer.

In the battery accommodating region 28, a plurality of leg accommodating recess portions 39 are provided on the bottom portion 32 and communicated with each other by a communicating groove 41. A vehicle body side power supply terminal 42 is disposed in a region surrounded by the leg accommodating recess portions 39.

A vertically elongated recessed guide portion 43 is provided on the rear wall portion 33. Although another recessed guide portion is provided also on the front wall portion 31, it cannot be seen for the convenience of illustration.

In addition, a locking mechanism 44 is attached to the rear wall portion 33. An operating element 45 for the locking mechanism 44 extends into the container 34. Preferably, the operating element 45 is disposed near to the right end or the left end of the container 34. This arrangement enables the operating element 45 free from being an obstacle when small articles are placed into or out of the container 34.

A vehicle-mounted battery 50 is a comparatively simple hexahedron and has a grip 51 on an upper face 50a thereof; has vertically elongated projections 52 on a front face 50b and a rear face 50c thereof; has a charging portion 53 on a left side face 50d thereof; has discharging portions 54 and 55 on a right side face 50e thereof; and has a battery side power supply terminal 56 on a lower face 50f thereof.

By fitting the projections 52 into the recessed guide portions 43 and moving down the vehicle-mounted battery 50, the vehicle-mounted battery 50 can be smoothly accommodated into the battery accommodating region 28. By the fitting between the projections 52 and the recessed guide portions 43, the battery side power supply terminal 56 can be fitted into the vehicle body side power supply terminal 42 without waggling. Similarly, by the fitting between the projections 52 and the recessed guide portions 43, the vehicle-mounted battery 50 can be pulled up without waggling.

The projections 52 may be changed to recesses. In this instance, the recessed guide portions 43 may be changed to projecting guide portions.

On the left side frame 26, a charging side opening 57 is provided at a position corresponding to the charging portion 53 of the vehicle-mounted battery 50.

On the right side frame 27, discharging side openings 58, 58 are provided at positions corresponding to the discharging portions 54 and 55 of the vehicle-mounted battery 50.

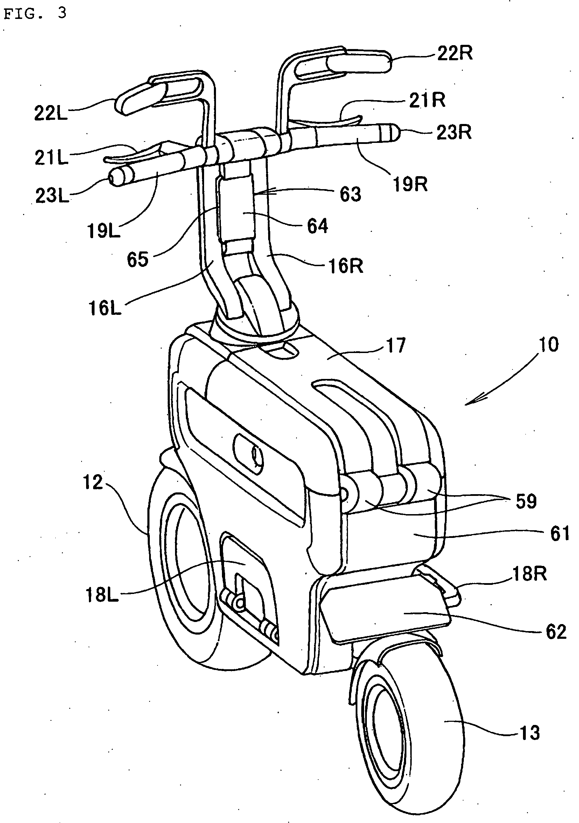

FIG. 3 is a perspective view as viewed from rearward of the motor driven vehicle 10. The motor driven vehicle 10 includes rollers 59, 59 on a rear face of the vehicle body 11 and further includes a tail lamp unit 61 and a license plate 62 below the rollers 59, 59.

Further, the motor driven vehicle 10 includes a portable terminal 63 between the left and right handle posts 16L and 16R. This portable terminal 63 is configured from a display portion 64 which displays a vehicle speed, a direction indication, a power storage amount and other states, and a terminal main body 65 in which an arithmetic operation circuit and a memory are built therein. In other words, the motor driven vehicle 10 does not fixedly have a meter unit. Instead, the portable terminal 63 substitutes for the meter unit.

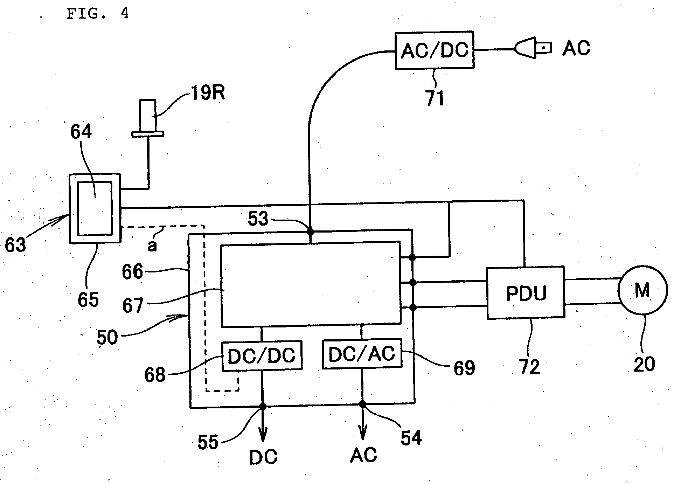

As shown in FIG. 4, the vehicle-mounted battery 50 includes a battery main body 67 as well as transformers 68 and 69 built in a battery case 66. The transformer 68 is a DC/DC converter for transforming direct current (dc) into direct current with different in voltage, whereas the transformer 69 is a DC/AC inverter for converting direct current of 12 V into alternate current (ac) of 100 V, for example.

When the motor driven vehicle 10 is not running, predetermined dc (for example, DC 24 V) is supplied from a commercial power supply (AC 100 V, 110 V, 200 V, 220 V and so forth) to the charging portion 53 through a charger 71 to carry out charging.

When the motor driven vehicle 10 is running, power is supplied from the charging portion 53 to the electric motor 20 through a driving circuit 72 to carry out running. Thereupon, the running speed may be adjusted by detecting the amount of rotation of the right handle grip 19R by a sensor, sending the detected information to the portable terminal 63, and controlling the driving circuit 72 instructed by the portable terminal 63. It is to be noted that the information of rotation of the right handle grip 19R may be sent directly to the driving circuit 72.

When the motor driven vehicle 10 is not running, for example, upon outdoor camping, the vehicle-mounted battery 50 can be served as a power supply. In other words, the discharging portion 54 can be used to receive supply of AC 100 V (or AC 110 V) so as to be used for rice cooker or for illumination.

Further, the discharging portion 55 can be used to receive supply of DC 12 V so as to be used for a personal computer.

The vehicle-mounted battery 50 can receive supply of power not only being accommodated in the vehicle body but also being removed from the vehicle body, namely, by the vehicle-mounted battery 50 by itself.

Further, a power supply system a indicated by an imaginary line is extended from the transformer 68 and electrically connected to the portable terminal 63 so that constant or occasional power supply to the portable terminal 63 is implemented. This can prevent from decreasing in the remaining electric amount of the built-in battery incorporated in the portable terminal 63.

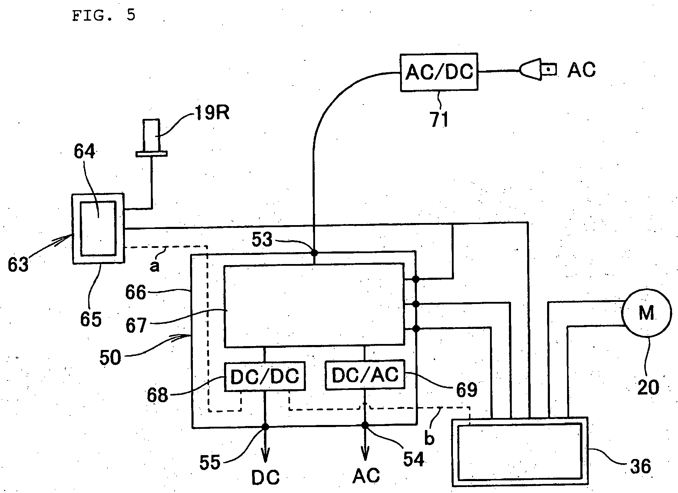

FIG. 5 is a view showing a modification example of FIG. 4. The driving circuit 72 in FIG. 4 is replaced by the tablet type terminal 36. The same parts other than the tablet type terminal 36 as those in FIG. 4 are denoted by the same reference symbols, therefore detailed description will be omitted.

A power supply system b indicated by an imaginary line is extended from the transformer 69 and electrically connecting to the tablet type terminal 36 so that constant or occasional power supply to the tablet type terminal 36 is implemented. This can prevent from decreasing in the remaining electric amount of the built-in battery incorporated in the tablet type terminal 36.

The motor driven vehicle of the present invention is a motor driven two-wheeled vehicle wherein the handle posts and the handle grips can be folded. Such a foldable structure is described in detail below.

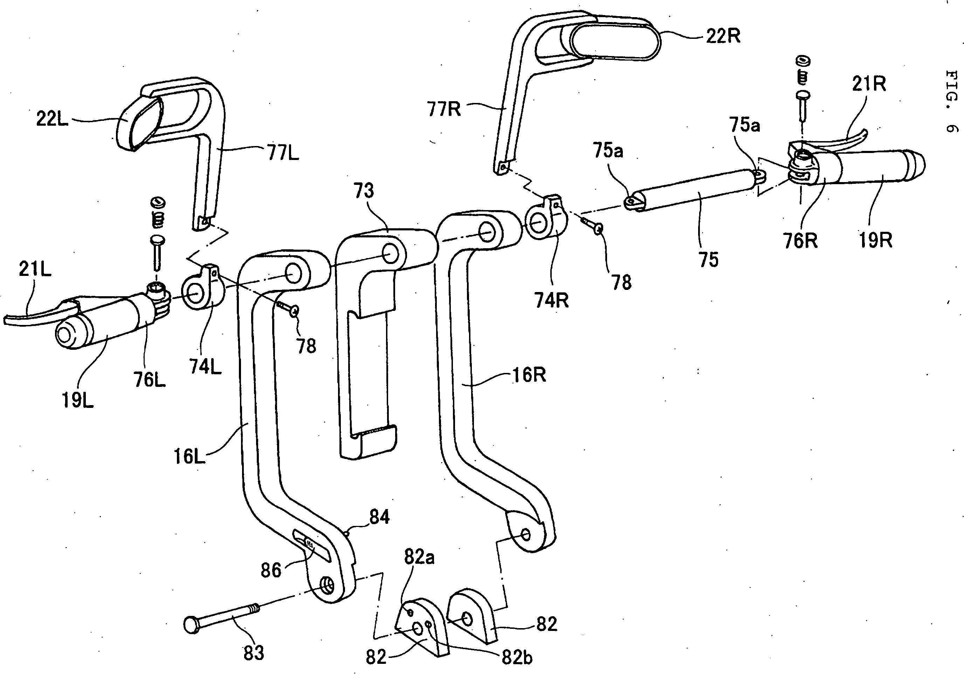

As shown in FIG. 6, an L-shaped portable terminal holder 73 is placed between the substantially rectangular U-shaped handle posts 16L and 16R. Ring-shaped mirror supporting members 74L and 74R are placed on the outer sides in the vehicle widthwise direction with respect to the handle posts 16L and 16R. A rod 75 is inserted in the mirror supporting members 74L and 74R.

The rod 75 projects at the opposite ends thereof, and brake lever supporting members 76L and 76R are attached to the projecting ends of the rod 75. In the present example, the handle grip 19L is integrated with the left brake lever supporting member 76L while the handle grip 19R serving as an accelerator grip is attached to the right brake lever supporting member 76R.

An F-shaped mirror stay 77R as viewed from the driver is fastened to the right mirror supporting member 74R with a screw 78 so as to swing leftward and rightward. The back mirror 22R is pivotally attached to the mirror stay 77R.

Similarly, an F-shaped mirror stay 77L is fastened to the left mirror supporting member 74L with another screw 78 so as to swing leftward and rightward. The back mirror 22L is pivotally attached to the mirror stay 77L.

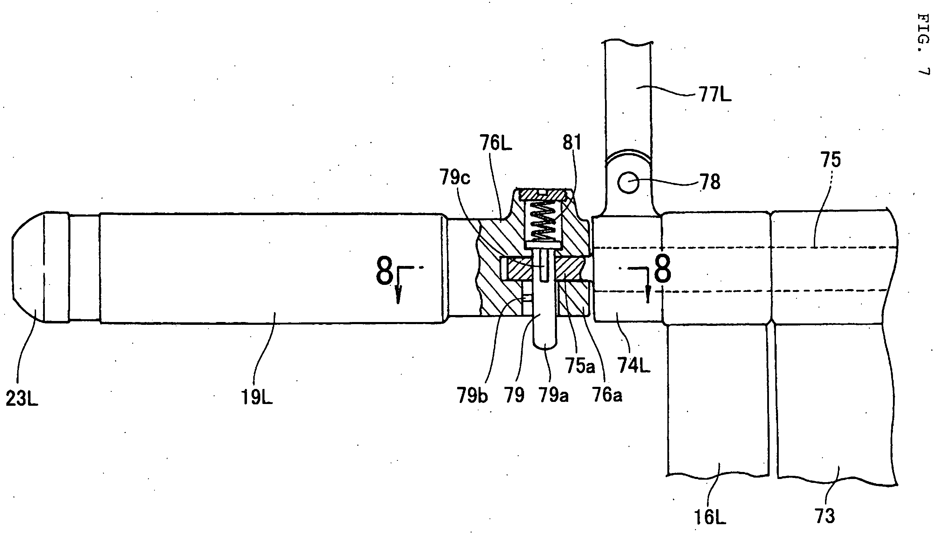

As shown in FIG. 7, the brake lever supporting member 76L is fitted at a forked portion 76a thereof with a tongue 75a formed at an end portion of the rod 75 and is connected by a headed pin 79 extending downward from above. The headed pin 79 is biased downwardly by a compression spring 81. The headed pin 79 projects at a lower portion thereof downwardly from the brake lever supporting member 76L. The headed pin 79 is pushed up by a thumb or the like of the left hand. It is to be noted that, since a rotation prevention projection 79b projects from the headed pin 79 and is fitted in a groove on the brake lever supporting member 76L side, there is no possibility that the headed pin 79 may rotate around the axis.

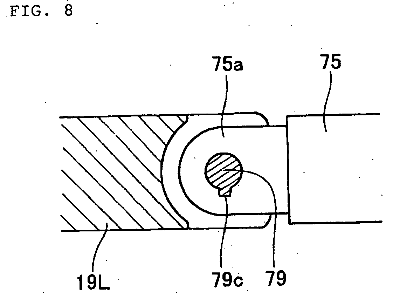

A sectional view taken along line 8-8 of FIG. 7, FIG. 8 shows a key portion 79c is formed integrally on the headed pin 79. When the handle grip 19L is positioned on the axis of the rod 75 (when the handle grip 19L is in a non-folded position), the handle grip 19L is fixed with respect to the rod 75 by a fixing action of the key portion 79c.

If the headed pin 79 is pushed up in FIG. 7, then the key portion 79c moves upwardly and is removed from the tongue 75a.

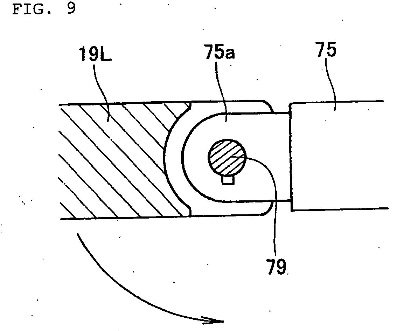

Consequently, the handle grip 19L can be rotated horizontally around the headed pin 79 as seen in FIG. 9. From the foregoing, the handle grip 19L can be folded at any time if necessary.

It is to be noted that, in FIG. 7, the headed pin 79 projects downwardly (toward the road surface). On the motorcycle, a winker switch and a horn switch are projected toward the driver. Since the winker switch and the horn switch extend horizontally and the headed pin 79 extends downwardly, there is no possibility of touching with the headed pin 79 in operating the winker switch or the horn switch.

Now, a folding procedure of the handle posts is described.

As shown in FIG. 6, the left and right handle posts 16L and 16R are connected to stays 82, 82, semicircular plate shaped at lower ends respectively, by a rod 83. The handle posts 16L and 16R can swing in the forward and rearward directions of the vehicle body around the rod 83 as the center of swing.

A normal position hole 82a and a folded position hole 82b are provided on one of the stays 82. Inserting a lock pin 84 into the hole 82a or 82b selectively enables to fix the handle posts 16L and 16R to a desired position. Such structure will be described with reference to following figures.

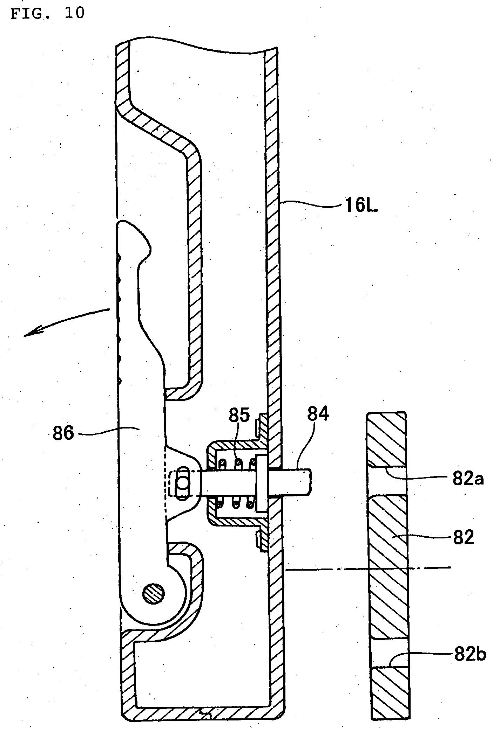

As shown in FIG. 10, the lock pin 84 is projectably and retractably attached to a lower portion of the handle post 16L. The lock pin 84 is biased so as to project by a spring 85. Further, the lock pin 84 is connected to an unlocking lever 86.

By pulling the unlocking lever 86, the lock pin 84 can be removed from the hole 82a or 82b. Pulling the unlocking lever 86 back, then the lock pin 84 is fitted in the hole 82a or 82b by an action of the spring 85 so that the handle post 16L is fixed to the stay 82.

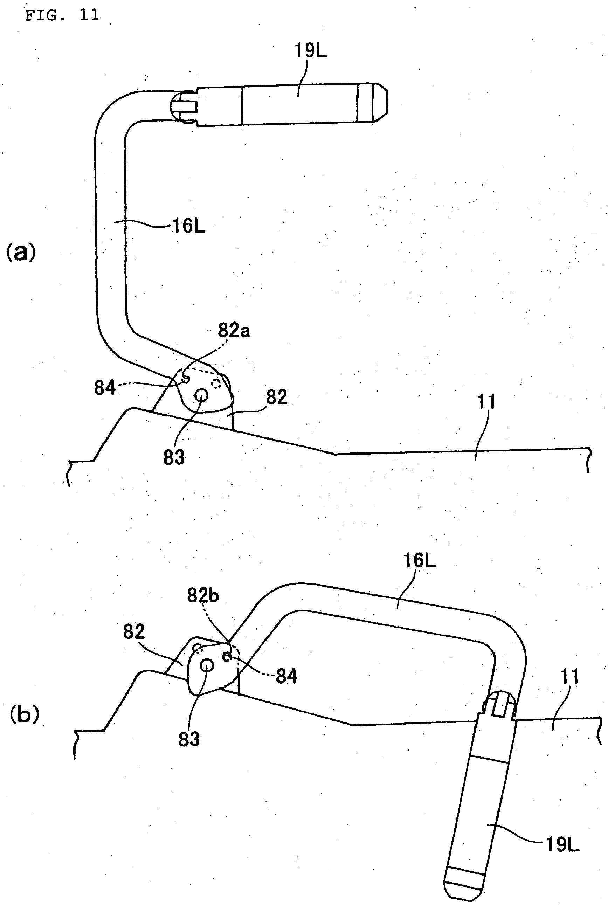

In particular, as shown in FIG. 11(a), at a normal position, the lock pin 84 is fitted in the hole 82a to fix the handle post 16L to the stay 82.

Meanwhile, as shown in FIG. 11(b), at a folded position, the lock pin 84 is fitted in the hole 82b to fix the handle post 16L to the stay 82.

Incidentally, in order to save the space of the parking place, it is desirable to keep a horizontally elongated vehicle in an upright state. In addition, after the vehicle is folded, sometimes the vehicle is carried to a place for keeping. It is not preferable that upon carrying, the steering wheel sways. Therefore, a steering locking mechanism is required for disabling steering of the steering wheel. An example of the steering locking mechanism is described below.

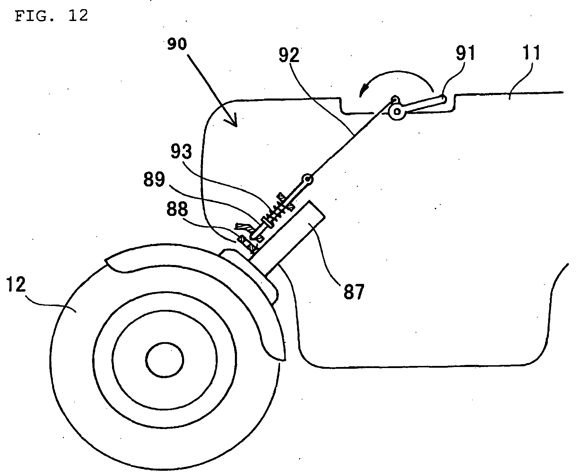

As shown in FIG. 12, a hole plate 88 is attached to a steering shaft 87 extending from the front wheel 12 as a steering wheel. On the vehicle body 11 side, a lock pin 89, a lock lever 91 and a wire 92 for interconnecting the lock lever 91 and the lock pin 89 are provided. In other words, a steering lock mechanism 90 is configured from the hole plate 88, the lock pin 89, the lock lever 91, the wire 92, and a spring 93.

Usually, the lock pin 89 is spaced from the hole plate 88 as seen in FIG. 12.

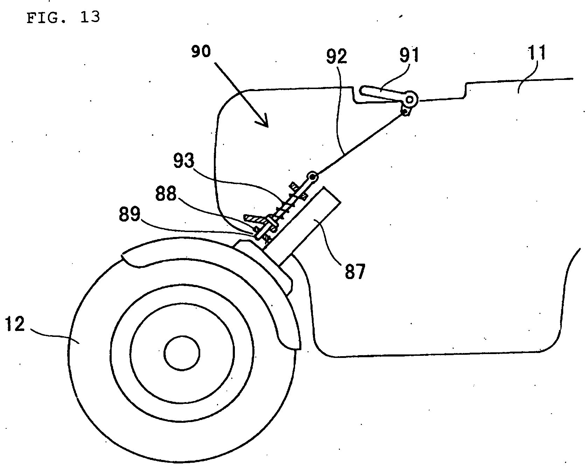

When steering locking is needed, then the lock lever 91 is operated in the direction indicated by an arrow mark. Consequently, by a biasing action of the spring 93, the lock pin 89 is advanced to be fitted into the hole plate 88, thereby to disable steering as seen in FIG. 13.

It is to be noted that the steering lock mechanism 90 can be omitted in the case where a handle locking mechanism is provided on the vehicle.

Now, an overall folding procedure of the handle post is described.

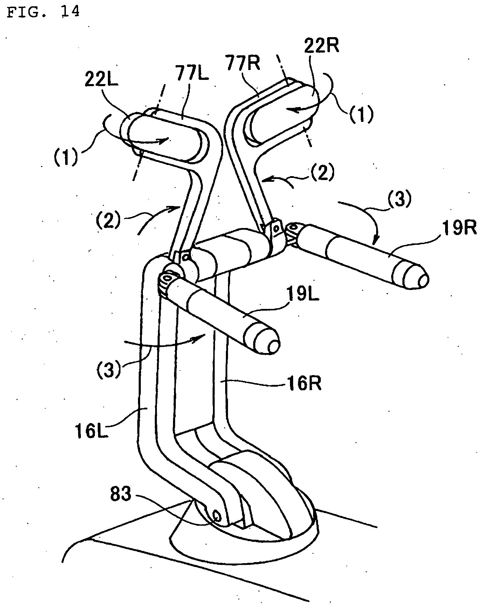

Referring to FIG. 14, the back mirrors 22L and 22R are accommodated into the mirror stays 77L and 77R as indicated by arrow marks (1). As occasion demands, the mirror stays 77L and 77R are displaced to the center of the vehicle body (arrow marks (2)). As indicated by arrow marks (3), the handle grips 19L and 19R are folded to extend rearward of the vehicle body.

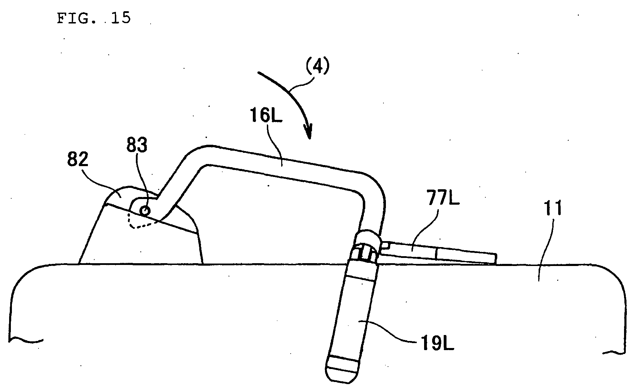

As seen in FIG. 15, the handle post 16L is folded by being pivoted of the rod 83 indicated by an arrow mark (4). As a result, such a form is established that the handle grip 19L extends along a side face of the vehicle body 11 and the handle post 16L and the mirror stay 77L extend along the upper face (seat upper face) of the vehicle body 11.

Now, a structure of a portable terminal holder is described in detail.

As shown in FIG. 16, the portable terminal holder 73 is configured from a holder base portion 95 fitted to the rod 75, a support shaft 96 extending perpendicularly to the rod 75 from the holder base portion 95, and a holder main body portion 97 holding the portable terminal holder 73 rotatably held by the support shaft 96.

While the support shaft 96 in the present example extends from the holder main body portion 97 to the holder base portion 95, it may be extend from the holder base portion 95 to the holder main body portion 97.

The support shaft 96 has an annular groove 98 provided at an end portion thereof, and after the support shaft 96 is inserted into the holder base portion 95, a screw 99 is screwed into the annular groove 98 from the holder base portion 95 side. As a result, the support shaft 96 is rotatably held by the holder base portion 95 without coming out.

The holder main body portion 97 is configured from a flat plate portion 101 which receives the portable terminal 63 thereon, a lower swollen portion 102 of an L-shaped sectional shape formed in a swollen manner on a lower edge of the flat plate portion 101, an upper swollen portion 103 formed in a swollen manner on an upper edge of the flat plate portion 101, and a pressing piece 105 swingably attached on the upper swollen portion 103 through a pin 104. The holder main body portion 97 is further configured from a torsion spring 106 for biasing the pressing piece 105 to an upper portion of the portable terminal 63, and a receiving side terminal 108 provided on an inner face of the lower swollen portion 102 corresponding to a terminal (portable side terminal 107) on the portable terminal 63 side.

The portable side terminal 107 and the receiving side terminal 108 correspond to the connection terminal in the power supply system a described with reference to FIG. 4. In particular, information system terminals for exchanging information and electric system terminals for power supply are included in the portable side terminal 107 and the receiving side terminal 108. Accordingly, not only exchanging of information system signals but also continuous or occasional automatic power supply are implemented to the portable terminal 63.

Now, a procedure of setting the portable terminal 63 to the holder main body portion 97 is described.

The portable side terminal 107 is fitted into the receiving side terminal 108 in accordance with an arrow mark indicated by an imaginary line. As a result, the portable terminal 63 closely contacts with the flat plate portion 101. Then, an upper portion of the portable terminal 63 is held down by the pressing piece 105. There is no possibility that the portable terminal 63 may come off the holder main body portion 97 even if swinging or turning the holder main body portion 97.

In the present example, an upper portion of the holder base portion 95 is swollen horizontally taken the support shaft 96 as a reference. This swelling blocks the sunlight from above to prevent the sunlight from reaching the portable terminal 63. In other words, the horizontally swollen portion of the holder base portion 95 serves as a visor portion 109.

It is to be noted that the holder main body portion 97 is to be swung or turned artificially. It is not preferable to swing or turn the holder main body portion 97 unintentionally. Therefore, in the present example, a click ball mechanism is additionally provided.

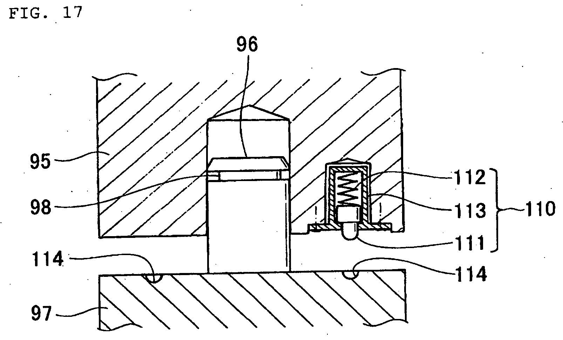

A sectional view taken along line 17-17 of FIG. 16, FIG. 17 shows a click ball mechanism 110 is additionally provided for the holder base portion 95. The click ball mechanism 110 is configured from a click ball 111 projectably and retractably provided with respect to the holder base portion 95, a compression spring 112 for biasing the click ball 111 in a direction of protruding, and a case 113 for accommodating the compression spring 112 and the click ball 111 therein. This case 113 plays also a role of restricting the click ball 111 so as not to protrude by more than a predetermined amount.

A plurality of recesses 114 are provided on the holder main body portion 97 side. The click ball 111 is fitted into one of the recesses 114 to restrict pivotal motion of the holder main body portion 97.

Turning the holder main body portion 97 with such force as to exceed the biasing force of the compression spring 112 leads to retraction of the click ball 111. Then the click ball 111 comes off the recess 114. Accordingly, the holder main body portion 97 can be turned.

A mode of use of the portable terminal holder described above is described below.

If priority is given to the visibility in the forward direction, it is recommended to set the portable terminal 63 to a position lower than the handle grips 23L and 23R as shown in FIG. 3. In addition, the shape of an upper portion of the portable terminal holder 73 and the shape of upper portions of the left and right handle posts 16L and 16R are same, overlapping with each other as viewed in side elevation of the vehicle as shown in FIG. 6.

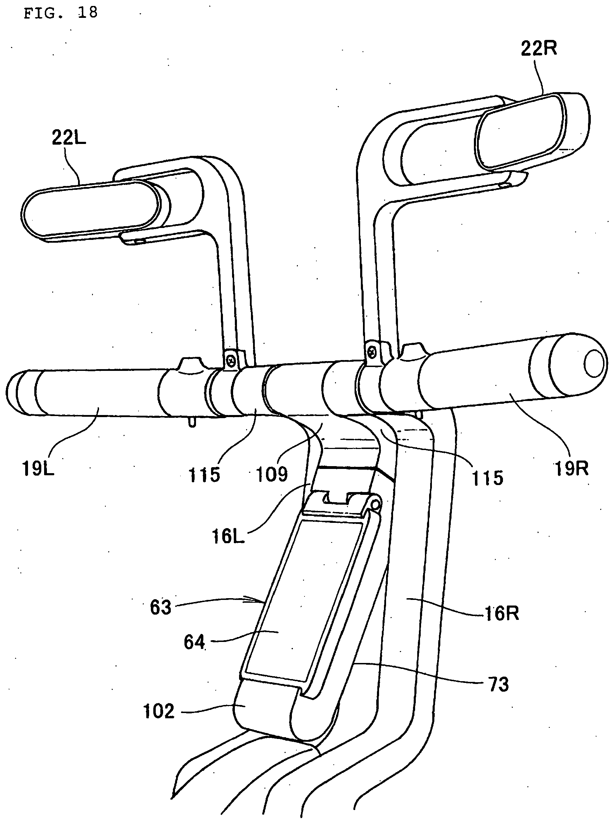

To enhance the visibility of the portable terminal 63 while assuring the visibility in the forward direction, it is recommended to set the display portion 64 of the portable terminal 63 to a swung position so as to oppose to the driver's face as shown in FIG. 18.

In the present example, the sunlight is blocked by the visor portion 109 (similar also in FIG. 3). In addition, also swollen portions 115, 115 at an upper portion of the handle posts 16L and 16R in the rearward direction of the vehicle serves as a visor (sun visor) which blocks the sunlight toward the portable terminal 63 (similar also in FIG. 3).

As a result, even when the vehicle runs under the clear sky, the visibility of the display portion 64 is assured well.

The visor portion 109 and the swollen portions 115, 115 serve also as a visor for blocking rainwater toward the portable terminal 63.

In order to improve the visibility of the portable terminal 63, the portable terminal holder 73 is swung by approximately 180 degrees such that the portable terminal 63 is positioned higher than the handle grips 19L and 19R. Since, in this instance, the display portion 64 faces forward of the vehicle, the portable terminal holder 73 is turned by 180 degrees. As a result, the display portion 64 is faced to the driver.

Many portable terminals 63 distinguish to automatically adjust the top and bottom of image. In the case of missing this adjustment function or fixed in a predetermined direction, namely, the image on the display portion 64 upside down, the image in a correct position may be obtained by an artificial operation.

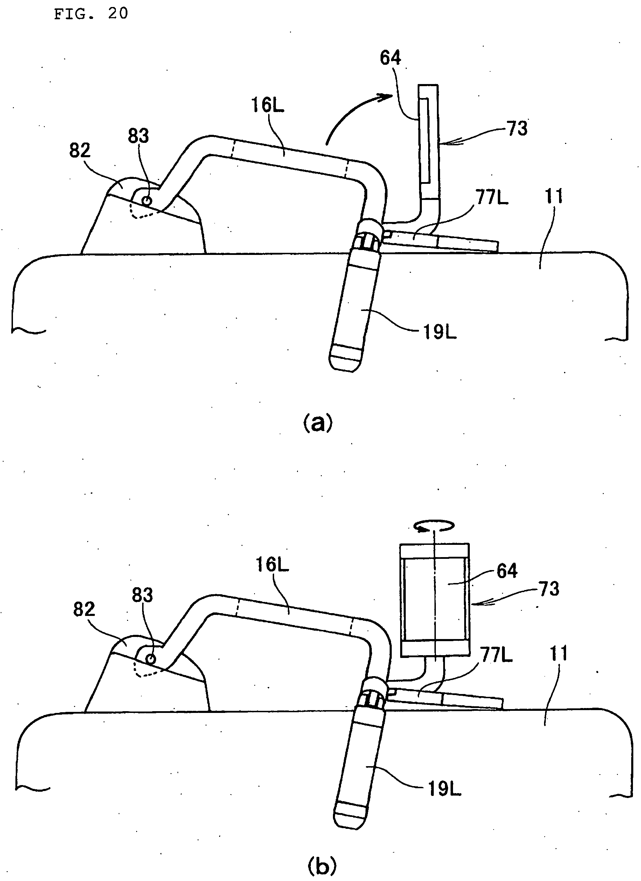

As shown in FIG. 20, even if the handle post 16L is folded, the portable terminal holder 73 can be positioned for good visibility by swinging and turning.

In particular, in FIG. 20(a), the portable terminal holder 73 is swung until the display portion 64 of the portable terminal is positioned vertically. Then, the portable terminal holder 73 is turned by approximately 90 degrees around a vertical axis in FIG. 20(b). As a result, the display portion 64 can be faced to a vehicle side direction. The display portion 64 of the portable terminal can be set to a suitable direction in viewing at a camp site or the like.

Preferred modification examples to the embodiment are described below.

In FIG. 2, the hinge 35 is a so-called rear hinge. This is changed to a side hinge.

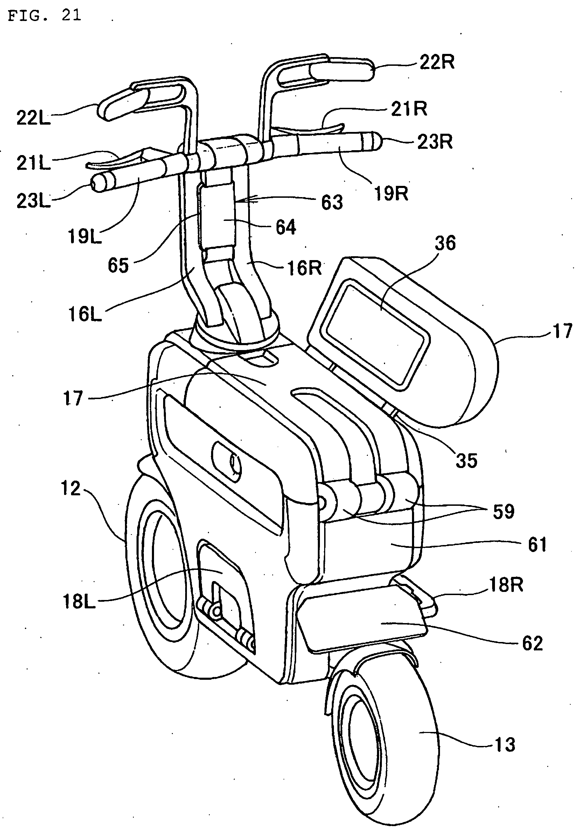

In particular, the hinge 35 is provided on a side as seen in FIG. 21. As a result, the seat 17 can be opened in one side of the vehicle side direction. As apparent from FIG. 21, the tablet type terminal 36 is much easier to be viewed than that in FIG. 2. This is suitable for viewing at a camp site.

In FIGS. 11(a) and 11(b), the handle post 16L is folded in order to be in a storage state from a running state. Instead of folding, the handle post 16L may be removed from the vehicle body 11 side.

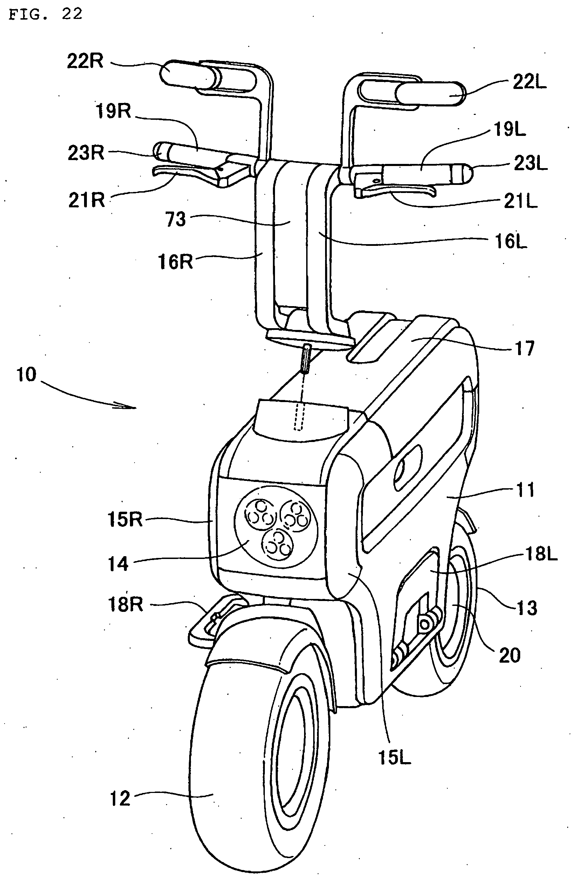

In particular, as shown in FIG. 22, the handle posts 16L and 16R, the portable terminal holder 73, the handle grips 19L and 19R and the back mirrors 22L and 22R are removed collectively from the vehicle body 11 side. When the vehicle is to run, the handle grips 19L and 19R and so forth are collectively attached to the vehicle body 11 side to restore the original state.

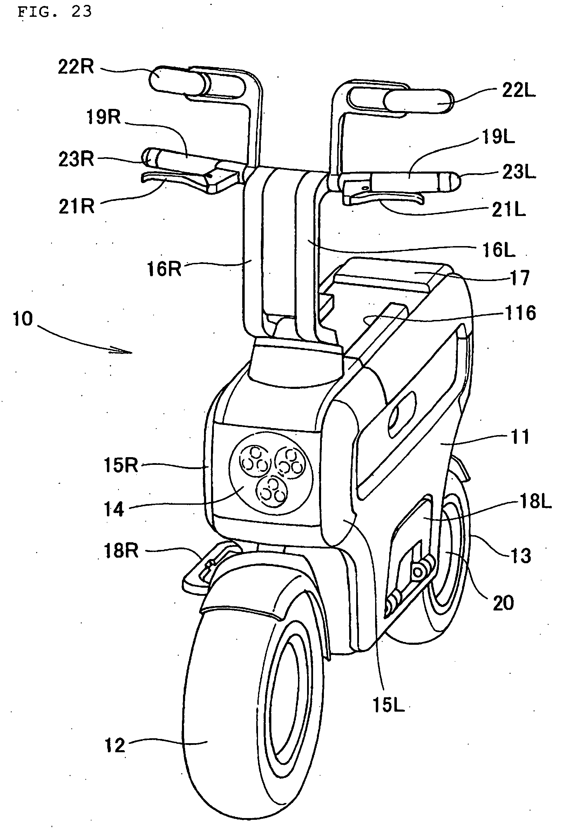

Also it is recommended to provide a T-shaped groove 116 in which the seat 17, the handle posts 16L and 16R, and the portable terminal holder 73 can be accommodated as shown in FIG. 23.

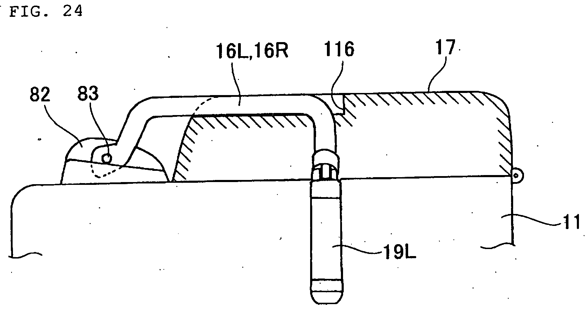

Furthermore, the stays 82 are positioned down with respect to an upper face of the seat 17 as shown in FIG. 24. Or, the upper face of the seat 17 is positioned up with respect to the stays 82. Since the T-shaped groove 116 is provided on the seat 17 as just described, upon folding, the handle posts 16L and 16R are accommodated into the T-shaped groove 116.

As seen in FIG. 24, the handle posts 16L and 16R are accommodated horizontally after elaborating the shapes and forms, a good accommodation appearance is promised.

The upper face of the handle posts 16L and 16R is flush with the upper face of the seat 17, an outer appearance is much more enhanced.

Even if the upper face of the handle posts 16L and 16R protrudes upwardly with respect to the upper face of the seat 17, the handle posts 16L and 16R stays in horizontal, a good outer appearance is obtained.

Although the handle posts 16L and 16R are completely accommodated in the T-shaped groove 116 and the upper face of the handle posts 16L and 16R is lowered with respect to the upper face of the seat 17, an outer appearance is improved.

Incidentally, in FIG. 1, disposed on the left and right of a front portion of the vehicle body 11, the front winkers 15L and 15R can be accommodated in the vehicle body 11.

In particular, the side faces of the vehicle body 11 are covered with a resin cover. Further, regions corresponding to the front winkers 15L and 15R are made of semi-transparent resin material. The vehicle body 11 can readily be injection-molded by a two-color molding method.

A light emitting element and a reflector are disposed on the rear side (the center of the vehicle body side) of the semi-transparent resin. The semi-transparent resin serves as a lens. There is no necessity to prepare each of the front winkers 15L and 15R as a single part.

In addition, the side faces of the vehicle body 11 can be covered with the single resin cover. The outer appearance of the vehicle is improved because no seam arising from the front winkers 15L and 15R appears.

It is to be noted that the resin cover is a light alloy metal cover, a semi-transparent resin material may be fitted into the portions of the lenses.

It is to be noted that the present invention is applied to a motor driven two-wheeled vehicle, it can also be applied to a motor driven three-wheeled vehicle as well as general motor driven vehicles.

The present invention is suitably applied to a motor driven two-wheeled vehicle.

10 ... Motor driven vehicle, 16L, 16R ... Handle post, 17 ... Seat, 20 ... Electric motor, 50 ... Vehicle-mounted battery, 63 ... Portable terminal, 73 ... Portable terminal holder, 83 ... Rod, 95 ... Holder base portion, 96 ... Support shaft, 97 ... Holder main body portion, 107 ... Portable side terminal, 108 ... Receiving side terminal, 109 ... Visor portion, 115 ... Swollen portion, 116 ... Groove provided on the seat (T-shaped groove).

## Claims

1. A motor driven vehicle (10) which includes a meter unit provided between left and right handle posts (16L, 16R) and runs using an electric motor (20) to which power is supplied from a vehicle-mounted battery (50) as a driving source, wherein
the meter unit is a portable terminal (63), a display portion on the portable terminal (63) for displaying information such as vehicle speed,
the portable terminal (63) is held by a portable terminal holder (73) tiltably attached to the left and right handle posts (16L, 16R) through a rod (75) extending in a vehicle widthwise direction,
the rod (75) and the portable terminal (63) are arranged between the left and right handle posts (16L, 16R),
the portable terminal holder (73) is configured from a holder base portion (95) fitted to the rod (75), a support shaft (96) extending perpendicularly to the rod (75) from the holder base portion (95), and a holder main body portion (97) turnably held by the support shaft (96) and holding the portable terminal holder (73),
the portable terminal holder (73) includes a visor portion (109) for covering the upper portion of the portable terminal (63) to block the sunlight, and
the left and right handle posts (16L, 16R) include a swollen portion (115) overlapping with the visor portion (109) as viewed in side elevation of the vehicle.

2. The motor driven vehicle according to claim 1, wherein the handle posts (16L, 16R) are foldable.

3. The motor driven vehicle according to claim 1 or 2, wherein
a receiving side terminal (108) is provided on the portable terminal holder (73) so as to connect a portable side terminal (107).

4. The motor driven vehicle according to claim 3, wherein
the portable side terminal (107) and the receiving side terminal (108) include, in addition to an information system terminal for exchanging information, an electric system terminal for supplying power from the vehicle-mounted battery (50) to the portable side terminal (107).

5. The motor driven vehicle according to claim 3, wherein
a seat (17), a driver is to be seated, is disposed rearward of the vehicle with respect to the handle posts (16L, 16R), and a groove (116) is provided for accommodating the folded handle posts (16L, 16R) on the seat (17).

6. The motor driven vehicle according to claim 5, wherein
the folded handle posts (16L, 16R) are accommodated horizontally in the groove (116) in such a manner as to extend in parallel to an upper face of the seat (17).

## Patentansprüche

1. Motorangetriebenes Fahrzeug (10), das eine Instrumenteneinheit umfasst, die zwischen einem linken und einem rechten Griffpfosten (16L, 16R) vorgesehen ist, und das einen elektrischen Motor (20) verwendend arbeitet, dem Energie von einer am Fahrzeug montierten Batterie (50) als eine Antriebsquelle zugeführt wird, wobei die Instrumenteneinheit ein tragbares Sichtgerät (63) ist, wobei ein Anzeigeabschnitt auf dem tragbaren Sichtgerät (63) zum Anzeigen von Informationen wie Fahrzeuggeschwindigkeit vorgesehen ist,
das tragbare Sichtgerät (63) durch einen Tragbares-Sichtgerät-Halter (73) gehalten wird, der neigbar an dem linken und rechten Griffpfosten (16L, 16R) durch eine Stange (75) fixiert wird, die sich in der Fahrzeugbreitenrichtung erstreckt,
die Stange (75) und das tragbare Sichtgerät (63) zwischen dem linken und dem rechten Griffpfosten (16L, 16R) angeordnet sind,
der Tragbares-Sichtgerät-Halter (73) eingerichtet durch einen Haltergrundabschnitt (95) gebildet wird, der an der Stange (75) angebracht ist, eine Halteachse (96), die sich rechtwinklig zu der Stange (75) von dem Haltergrundabschnitt (95) erstreckt, und einen Halterhauptkörperabschnitt (97), der drehbar durch die Halteachse (96) gehalten wird, und der den Tragbares-Sichtgerät-Halter (73) hält,
der Tragbares-Sichtgerät-Halter (73) einen Blendschutzabschnitt (109) zum Abdecken eines oberen Bereichs des tragbaren Sichtgeräts (63) abzudecken, um Sonnenlicht zu blockieren, und
der linke und rechte Griffpfosten (16L, 16R) einen verdickten Bereich (115) umfasst, der den Blendschutzabschnitt (109) in einer Seitenansicht des Fahrzeugs überlappt.

2. Motorangetriebenes Fahrzeug gemäß Anspruch 1, wobei die Griffpfosten (16L, 16R) faltbar sind.

3. Motorangetriebenes Fahrzeug gemäß Anspruch 1 oder 2, wobei
ein aufnahmeseitiger Anschluss (108) an dem Tragbares-Sichtgerät-Halter (73) vorgesehen ist, um mit einem Anschluss (107) der tragbaren Seite verbunden zu werden.

4. Motorangetriebenes Fahrzeug gemäß Anspruch 3, wobei der Anschluss (107) der tragbaren Seite und der empfangsseitige Anschluss (108) zusätzlich zu einem Informationssystemsichtgerät zum Austauschen von Informationen ein elektrisches Systemsichtgerät zum Zuführen von Energie von der fahrzeugseitig montierten Batterie (50) zu dem Anschluss (107) der tragbaren Seite umfasst.

5. Motorangetriebenes Fahrzeug gemäß Anspruch 3, wobei ein Sitz (17), auf dem ein Fahrer sitzen kann, im hinteren Bereich des Fahrzeugs in Bezug auf die Griffpfosten (16L, 16R) angeordnet ist und eine Nut (116) zum Aufnehmen der gefalteten Griffpfosten (16L, 16R) auf dem Sitz (17) vorgesehen ist.

6. Motorangetriebenes Fahrzeug gemäß Anspruch 1, wobei die gefalteten Griffpfosten (16L, 16R) horizontal in der Nut (116) in einer solchen Weise aufgenommen sind, dass sie sich parallel zu einer oberen Fläche des Sitzes (17) erstrecken.

## Revendications

1. Véhicule motorisé (10) qui comprend une unité de compteur prévue entre les montants de poignée gauche et droit (16L, 16R) et fonctionne à l'aide d'un moteur électrique (20) auquel l'énergie est fournie à partir d'une batterie (50) montée sur le véhicule en tant que source d'entraînement, dans lequel :
l'unité de compteur est un terminal portable (63), une partie d'affichage sur le terminal portable (63) pour afficher une information telle que la vitesse du véhicule,
le terminal portable (63) est maintenu par un support de terminal portable (73) fixé de manière inclinable sur les montants de poignée gauche et droit (16L, 16R) par le biais d'une tige (75) s'étendant dans le sens de la largeur du véhicule,
la tige (75) et le terminal portable (63) étant agencés entre les montants de poignée gauche et droit (16L, 16R),
le support de terminal portable (73) est configuré à partir d'une partie de base de support (75) montée sur la tige (75), un arbre de support (96) s'étendant perpendiculairement à la tige (75) à partir de la partie de base de support (95) et une partie de corps principale de support (97) maintenue de manière pivotante par l'arbre de support (96) et maintenant le support de terminal portable (73),
le support de terminal portable (73) comprend une partie de visière (109) pour recouvrir la partie supérieure du terminal portable (63) pour bloquer la lumière du soleil, et
les montants de poignée gauche et droit (16L, 16R) comprennent une partie bombée (115) chevauchant la partie de visière (109), lorsqu'elle est observée en élévation latérale du véhicule.

2. Véhicule motorisé selon la revendication 1, dans lequel :
les montants de poignée (16L, 16R) sont pliables.

3. Véhicule motorisé selon la revendication 1 ou 2, dans lequel :
un terminal latéral de réception (108) est prévu sur le support de terminal portable (73) afin de raccorder un terminal latéral portable (107).

4. Véhicule motorisé selon la revendication 3, dans lequel :
le terminal latéral portable (107) et le terminal latéral de réception (108) comprennent, en plus d'un terminal de système d'information pour échanger des informations, un terminal de système électrique pour fournir l'énergie de la batterie (50) montée sur le véhicule, au terminal latéral portable (107).

5. Véhicule motorisé selon la revendication 3, dans lequel :
un siège (17), sur lequel un conducteur doit être assis, est disposé vers l'arrière du véhicule par rapport aux montants de poignées (16L, 16R), et une rainure (116) est prévue pour loger les montants de poignée (16L, 16R) pliés sur le siège (17).

6. Véhicule motorisé selon la revendication 5, dans lequel :
les montants de poignée (16L, 16R) pliés sont logés horizontalement dans la rainure (116) afin de s'étendre parallèlement à une face supérieure du siège (17).
